# EUROPÄISCHE PATENTANMELDUNG

(11) **EP 3 708 410 A1**
(43) Veröffentlichungstag der Anmeldung: **16.09.2020**
(21) Anmeldenummer: 19162823.9
(22) Anmeldetag: 14.03.2019
(51) Int. Cl.: B60L 53/18

(54) **STÖRSICHERES LADEKABEL FÜR EIN ELEKTROFAHRZEUG**

(71) Anmelder: Siemens Aktiengesellschaft, 80333 München (DE)
(72) Erfinder: Bleisteiner, Thomas, 90602 Rengersricht (DE); Linzmaier, Klaus-Peter, 73650 Winterbach (DE)

(57) **Zusammenfassung**

Die Erfindung betrifft ein störsicheres Ladekabel (20) für ein Elektrofahrzeug (80). Ferner betrifft die Erfindung einen Ladestecker (P20), ein Ladesystem (100), sowie ein System (1000). Um ein Ladekabel bereitzustellen, das die Signalqualität zwischen Elektrofahrzeug und Ladeinfrastruktur, z.B. einer Ladesteuerung einer Ladesäule, erheblich verbessert, wird vorgeschlagen, dass das Ladekabel einen fahrzeugseitigen Stecker (P20), eine Schutzerdeleitung (PE) und eine Signalmasseleitung (SG) aufweist, die fahrzeugseitig derart angeordnet sind, dass sich die Potentiale der Signalmasseleitung (SG), der Schutzerdeleitung (PE) und einer fahrzeugseitigen Masseverbindung (GND80) ausgleichen, wenn der Stecker (P20) am Elektrofahrzeug (80) angeschlossen ist. Es ist weiter Aufgabe der Erfindung ein Ladesystem (100) sowie ein System (1000) bereitzustellen.

## Beschreibung

Die Erfindung betrifft ein störsicheres Ladekabel für ein Elektrofahrzeug. Ferner betrifft die Erfindung ein Ladesystem sowie ein System.

Als Energiespeicher kommt in Elektrofahrzeugen ein Speicher für elektrische Energie zum Einsatz. Dabei kann es sich um einen elektrochemischen Energiespeicher, wie beispielsweise ein Verbund aus Lithium-Ionen Akkumulatoren, handeln. Mit dem erfindungsgemäßen Ladekabel kann zum Aufladen des Energiespeichers des Elektrofahrzeugs elektrische Energie zugeführt werden oder zum Entladen des Energiespeichers diese Energie ins Energieversorgungsnetz zurückgespeist werden.

Zur Kommunikation kommen zwischen dem Fahrzeug und der Ladesteuerung bzw. der Ladeinfrastruktur verschiedene Systeme/ Protokolle zum Einsatz. Beispielsweise ist ein Control Pilot Signal gemäß IEC 15118 und/oder IEC 61851 bekannt, wo ein PWM Signal zum Einsatz kommt, welches zur Signalisierung des Grundstatus des Elektrofahrzeugs gegenüber der Ladesteuerung eingesetzt wird. Dazu wird das Control Pilot Signal mit einem fahrzeugseitigen Widerstand belastet, was wiederum die Spannung des Control Pilot Signals bezüglich Masse und/oder Schutzleiter, im Englischen auch "protective earth" PE, beeinflusst. Das Spannungsniveau von 12V, 9V, 6V, 3V signalisiert dabei verschiedene Betriebszustände des Ladevorgangs. Damit der Grundstatus des Ladevorgangs zuverlässig vom Elektrofahrzeug signalisiert und von der Ladesteuerung erkannt werden kann, muss die Flankensteilheit des PWM Signals gewisse Kriterien erfüllen. Dies gilt insbesondere hinsichtlich der Anstiegs- und Abfallzeit der Flanke; auch die Pulsbreite bzw. der Tastgrad muss der in der Norm geforderten Pulsbreite/dem Tastgrad entsprechen. Überschreitet die Anstiegs- und/oder die Abfallzeit eine gewisse Länge, so kann das PWM Signal nicht mehr zuverlässig erkannt und ausgewertet werden. Ein PWM Signal ist eine Art eines Rechtecksignals.

Für weitergehende Funktionen (sog. Smart Charging) ist nach IEC 15118 ein Powerline-Signal (u.a. auf HomePlug GreenPHY Basis) vorgesehen, über das mit einer höheren Bandbreite kommuniziert werden kann.

Bei Ladekabeln mit einer gewissen Länge kann eine hohe Signalqualität (sowohl des Rechtecksignals als auch des Powerline-Signals) nicht mehr garantiert werden.

Es ist Aufgabe der Erfindung ein Ladekabel bereitzustellen, das die Signalqualität zwischen Elektrofahrzeug und Ladeinfrastruktur, z.B. einer Ladesteuerung einer Ladesäule, erheblich verbessert. Es ist weiter Aufgabe der Erfindung ein Ladesystem sowie ein System bereitzustellen.

Ladeinfrastrukturen können eine Ladesteuerung in einer Ladesäule aufweisen und sind zum Steuern eines Ladevorgangs ausgebildet, wobei der Ladevorgang das Laden und/oder Entladen eines Energiespeichers des Elektrofahrzeugs umfasst. Ladesteuerungen steuern dazu eine Leistungselektronik, z.B. einen Umrichter oder eine Energieversorgungseinheit, an, die nach erfolgter Kontaktierung und Kommunikation zwischen dem Elektrofahrzeug und der Ladesteuerung zum Laden und/oder Entladen des Energiespeichers hinzu geschaltet werden kann. Die Leistungselektronik stellt dabei die Leistung zum Aufladen des Energiespeichers bereit, die Ladesteuerung steuert den Ladevorgang und kann weitere Parameter bzgl. des Ladevorgangs überwachen. Ein Entladevorgang kann beispielsweise zum Stützen des Energieversorgungsnetzes oder zum Versorgen von Verbrauchern dienen. Die Ladesteuerung kommt hier analog zum Einsatz.

Zur Lösung der Aufgabe wird ein Ladekabel für ein Elektrofahrzeug vorgeschlagen. Das Elektrofahrzeug weist eine fahrzeugseitige Masseverbindung auf. Diese Masseverbindung ist in der Regel eine Verbindung mit dem Chassis bzw. der Karosserie des Fahrzeugs. Das Ladekabel weist einen fahrzeugseitigen Stecker, eine Schutzerdeleitung und eine Signalmasseleitung auf. Diese Leitungen und die Masseverbindung des Elektrofahrzeugs sind potentialbehaftet. Es hat sich herausgestellt, dass ein Potentialausgleich in der vorliegenden Konfiguration besonders vorteilhaft ist, wenn sich dieser fahrzeugseitig einstellt, wenn der Stecker am Elektrofahrzeug angeschlossen ist. Dazu sind die Schutzerdeleitung, die Signalmasseleitung und der Stecker so angeordnet bzw. kontaktiert, dass sich die Potentiale der Signalmasseleitung, der Schutzerdeleitung und der fahrzeugseitigen Masseverbindung ausgleichen, wenn der Stecker am Elektrofahrzeug angeschlossen ist. Dies führt dazu, dass eine Kommunikation zwischen dem Elektrofahrzeug und der Infrastruktur auf die Signalmasseleitung bezogen werden kann, die eine erheblich bessere Signalqualität erreicht, als eine Kommunikation bezüglich der Schutzerdeleitung, die mit erheblichen Störungen belastet ist.

Die Signalmasseleitung und die Schutzerdeleitung sind als voneinander verschiedene Leitungen ausgebildet und vorteilhafterweise so angeordnet, dass eine Einkopplung von Störungen von der Schutzerdeleitung auf die Signalmasseleitung minimiert wird.

Das Ladekabel kann weiterhin Leistungsadern aufweisen, die zum Übertragen der eigentlichen Leistung zum Laden des Elektrofahrzeugs ausgestaltet sind. Diese können für DC-Laden als L+ und L- und für AC-Laden als L1, L2 und L3 ausgestaltet sein.

Mit Ladestecker ist gleichermaßen eine männliche oder eine weibliche Form eines Steckers gemeint. Der Ladestecker ist am fahrzeugseitigen Ende, d.h. im Endbereich des Ladekabels angebracht und vereinfacht das kontaktieren des Ladekabels mit dem Elektrofahrzeug. Ladestecker sind aus dem Stand der Technik bekannt, unter anderem: Typ 1 gemäß SAE J1772-2009, Typ 2 gemäß EN 62196-2 (VDE-AR-E 2623-2-2) und/oder Typ 3 gemäß EV Plug Alliance.

In einer besonders vorteilhaften Weiterbildung ist die Signalmasseleitung als ein Schirm ausgebildet. Der Schirm kann beispielsweise ein Geflecht aus Kupferdrähten, anderen Drähten oder metallisch beschichteten Kunstfasern sein. Dies hat den besonderen Vorteil, dass anstatt einer separaten Signalmasseleitung ein ggf. bereits vorhandener Schirm als Signalmasseleitung verwendet werden kann. Dies spart eine weitere Leitung und verbessert die Signalqualität durch die Schirmung. Die fahrzeugseitige Schirmauflegung z.B. im Stecker kann dann dementsprechend so vorgesehen sein, dass sich das Potential des Schirms, der Schutzerdeleitung sowie der fahrzeugseitigen Masseverbindung ausgleicht. Dies kann z.B. mittels eines Sternpunkts realisiert werden.

In einer weiteren vorteilhaften Ausführungsform ist das Ladekabel derart ausgestaltet, dass sich die Potentiale in einem Endbereich des Ladekabels ausgleichen. Es hat sich herausgestellt, dass sich der Potentialausgleich nicht unbedingt erst im Stecker einstellen muss, sondern dass dies auch in einem Endbereich des Ladekabels möglich ist. Der Endbereich des Ladekabels kann dabei insbesondere auch einen Ladestecker umfassen, wobei der Potentialausgleich sowohl im Ladestecker als auch davor angeordnet sein kann. Mit Endbereich ist dabei der Teil des Ladekabels bezeichnet, der bei einem Ladevorgang an das Elektrofahrzeug, bzw. dessen Buchse geführt wird und mit dem Elektrofahrzeug verbunden wird. Der Endbereich ist somit beim Ladevorgang sehr nahe am Fahrzeug und am gegenüberliegenden Ende des mit der Infrastruktur verbundenen Teils des Ladekabels angeordnet.

Der Endbereich lässt sich also zumindest als die Kabelhälfte definieren, die sich im angeschlossenen Fall auf der Seite des Elektrofahrzeugs befindet. Der Endbereich kann z.B. als das letzte Drittel oder Viertel des Ladekabels definiert sein, insbesondere die letzten 20%, 15% oder 10% der Ladekabels, die zur Anordnung am Fahrzeug ausgebildet sind. Das Ladekabel ist infrastrukturseitig oft fest mit der Infrastruktur verbunden.

Mit der Anordnung des Potentialausgleichs im Endbereich soll die Strecke, die eine Kommunikation über die störungsbehaftete Schutzerdeleitung benötigt und einer im Fahrzeug angeordneten Kommunikationsvorrichtung möglichst kurz gehalten werden. In anderen Worten soll die Strecke, die eine Kommunikation bezüglich der Signalmasseleitung ermöglicht, möglichst lang sein, idealerweise von der Infrastruktur bis zum Elektrofahrzeug reichen. Dies hat den Vorteil, dass Störungen weiter minimiert werden.

In einer besonders vorteilhaften Ausführungsform dient ein Sternpunkt zum Ausgleich der Potentiale. Sternpunkte sind sternförmig zusammengeschaltete Leitungen bzw. Leiter, in diesem Fall dient der Sternpunkt zum Ausgleich der Potentiale der Signalmasseleitung, der Schutzerdeleitung und der fahrzeugseitigen Masseverbindung. Der Sternpunkt kann dabei im Ladekabel selbst, im Stecker oder an dessen Steckerkontakten angeordnet sein.

In einer besonders vorteilhaften Ausführungsform weist das Ladekabel einen Schirm auf, der wiederum eine oder mehrere der folgenden Leitungen enthält:
- eine CP-Signalleitung,
- eine PP-Signalleitung,
- eine Datensignalleitung,
- und/oder eine Analogsignalleitung.

Es hat sich herausgestellt, dass das Ladekabel in der Ausführungsform, die einen Schirm aufweist, besonders dafür geeignet ist, Signalleitungen innerhalb des Schirms zu führen. Diese Anordnung verbessert die Signalqualität aller beteiligten Signale, insbesondere aber von Rechtecksignalen und Powerline-Signalen erheblich. In dieser Ausführungsform kann beispielsweise eine Twisted-Pair-Leitung verwendet werden, da dieses besonders störunempfindlich ist.

In einer weiteren Ausführungsform dient die Signalmasse als Bezugspotential für ein Kommunikationssignal und/oder ein Rechtecksignal.

In einer Ausführungsform eines Ladekabels ohne Schirm kann das Ladekabel eine oder mehrere der folgenden Leitungen enthalten: eine CP-Signalleitung, eine PP-Signalleitung, eine Datensignalleitung, und/oder eine Analogsignalleitung.

In einer weiteren Ausführungsform ist das Ladekabel derart ausgestaltet, dass sich die Potentiale der Signalmasseleitung bzw. des Schirms, der Schutzerdeleitung und der fahrzeugseitigen Masseverbindung im Elektrofahrzeug ausgleichen, wenn der Stecker am Elektrofahrzeug angeschlossen ist. Insbesondere von Vorteil ist es, wenn sich ein Sternpunkt im Elektrofahrzeug bildet, wenn der Stecker am Elektrofahrzeug angeschlossen ist. Dies kann z.B. durch eine spezielle Steckerform erreicht werden, die beim Stecken des Kabels einen Potentialausgleich bzw. einen Sternpunkt bildet. Alternativ kann auch im Fahrzeug selbst ein Potentialausgleich vorgesehen sein. Es ist möglich ein Ladekabel mit Potentialausgleich im Ladekabel bzw. im Stecker mit einem Elektrofahrzeug mit einem ebenfalls vorhandenen Potentialausgleich zu kombinieren.

In einer weiteren vorteilhaften Ausführungsform weist der fahrzeugseitige Stecker je einen Kontakt für die Signalmasseleitung und einen Kontakt für die Schutzerdeleitung auf. Dies ermöglicht eine besonders störungsfreie Kommunikation.

Die Aufgabe wird weiterhin durch ein Ladesystem gelöst, das zumindest ein erfindungsgemäßes Ladekabel aufweist, sowie eine Kommunikationseinrichtung, die zur Kommunikation über zumindest eine Signalleitung und eine Signalmasseleitung als Bezugspotential ausgebildet ist. Ein derartiges Ladesystem weist eine besonders hohe Störfestigkeit auf.

In einer weiteren Ausführungsform des Ladesystems weist die Kommunikationseinrichtung eine galvanische Trennung auf. Die galvanische Trennung dient zur Entkopplung der Kommunikationseinrichtung von den Störeinflüssen beispielsweise der Schutzerdeleitung. Die galvanische Trennung kann dabei z.B. induktiv, kapazitiv oder optisch ausgestaltet sein. Die Kombination des erfindungsgemäßen Ladekabels mit einer infrastrukturseitigen galvanischen Trennung hat sich als besonders vorteilhaft erwiesen.

In einer weiteren Ausführungsform weist die Kommunikationseinrichtung einen Signalgenerator zur Erzeugung eines Rechtecksignals und/oder einer Signalquelle zur Erzeugung eines Kommunikationssignals auf. Das Rechtecksignal kann beispielsweise ein PWM-Signal zur Signalisierung eines CP-Signals gemäß Norm sein. Das Kommunikationssignal kann beispielsweise ein Powerline-Signal sein, das auf das PWM-Signal aufmoduliert ist.

Die Signalquelle ist dabei zur Erzeugung eines Kommunikationssignals für das fahrzeugseitige Kommunikationssystem ausgebildet. Von besonderem Vorteil ist es, wenn die Signalquelle als ein Powerline-Modem ausgebildet ist. Das Kommunikationssignal wird vorzugsweise mittels eines QAM und/oder eines OFDM Verfahrens, auf ein weiteres Signal/eine weitere Spannung aufmoduliert.

Der Signalgenerator dient zur Erzeugung eines Rechtecksignals. Das Rechtecksignal kann dabei ein PWM-Signal sein und dient zur Signalisierung von Ladezuständen über ein Control-Pilot-Signal. Das Rechtecksignal sowie das Kommunikationssignal können über das Ladekabel bezüglich der Signalmasseleitung übertragen werden. Das Signalisieren von Ladezuständen gemäß IEC 61851 ist somit zuverlässig und mit hoher Signalqualität möglich.

Die Kommunikationseinrichtung kann weiterhin zum Erzeugen eines Rechtecksignals und zum Aufmodulieren eines Kommunikationssignals auf das Rechtecksignal ausgebildet sein. Das Aufmodulieren wird vorzugsweise mittels eines QAM- und/oder mittels eines OFDM-Verfahrens durchgeführt. Vorzugsweise weist die Kommunikationseinrichtung eine kombinierte Signalquelle und Signalgenerator auf. Die kombinierte Quelle kann als ein PWM-Generator, auf dessen Ausgang ein Kommunikationssignal aufmoduliert wird, ausgebildet sein. Derartige Lösungen lassen sich als hochintegriertes System on a Chip realisieren. Die Kommunikationseinrichtung weist in einer Weiterbildung eine Koppelvorrichtung auf. Die Koppelvorrichtung ist dabei zum Einbringen eines Kommunikationssignals auf einen Leiter bzw. eine Leitung, insbesondere eine CP-Signalleitung, ausgebildet. Die CP-Signalleitung kann dabei als so genannter Control-Pilot-Leiter dienen und ist beispielsweise aus der IEC61851 bekannt. Die Koppelvorrichtung kann dabei auch zur galvanischen Entkopplung ausgebildet sein. Das Kommunikationssignal kann so z.B. galvanisch entkoppelt auf die CP-Leitung eingekoppelt werden können. Insbesondere ist eine kapazitive Kopplung des Kommunikationssignals vorteilhaft.

In einer weiteren Ausführungsform weist das Ladesystem eine oder mehrere Ladesteuerungen sowie eine oder mehrere Energieversorgungseinrichtungen auf. Die Ladesteuerungen steuern dabei die Ladezyklen, die Energieversorgungseinrichtung stellen die notwendige Energie zum Aufladen oder zum Entladen des Fahrzeugs bereit.

Die Aufgabe wird weiterhin durch ein System gelöst, das ein Elektrofahrzeug sowie ein Ladekabel aufweist. Dabei ist das Elektrofahrzeug so ausgestaltet, dass sich die Potentiale der Signalmasseleitung, der Schutzerdeleitung und der fahrzeugseitigen Masseverbindung im Elektrofahrzeug ausgleichen, wenn der Stecker am Elektrofahrzeug angeschlossen ist.

Die Aufgabe wird weiterhin durch einen Ladestecker für ein Ladekabel, insbesondere ein erfindungsgemäßes Ladekabel, gelöst. Der Ladestecker weist dazu eine Kontaktvorrichtung für eine Signalmasseleitung, eine Schutzerdeleitung und eine fahrzeugseitige Masseverbindung auf. Es kann für die Signalmasseleitung und die Schutzerdeleitung kabelseitig eine einzige Kontaktvorrichtung oder jeweils eine Kontaktvorrichtung vorgesehen sein. Wenn die Signalmasseleitung als Schirm ausgebildet ist, kann die Kontaktvorrichtung als Schirmauflegung ausgelegt sein. Die fahrzeugseitige Masseverbindung kann ebenfalls als Kontaktvorrichtung ausgebildet sein - bspw. ein Kontakt-Pin, der fahrzeugseitig im Stecker angeordnet ist. Der Ladestecker weist in einer Weiterbildung eine Ausgleichsvorrichtung, vorzugsweise einen Sternpunkt, auf, die zum Potentialausgleich der Signalmasseleitung, der Schutzerdeleitung und der fahrzeugseitigen Masseverbindung ausgebildet ist.

Im Folgenden wird die Erfindung anhand der in den Figuren dargestellten Ausführungsbeispiele näher beschrieben und erläutert. Es zeigen:
- FIG 1: ein Ladekabel gemäß Stand der Technik,
- FIG 2: ein Ladekabel gemäß einer ersten Ausführungsform,
- FIG 3: ein Ladekabel gemäß einer zweiten Ausführungsform und
- FIG 4: ein Ladekabel gemäß einer dritten Ausführungsform.

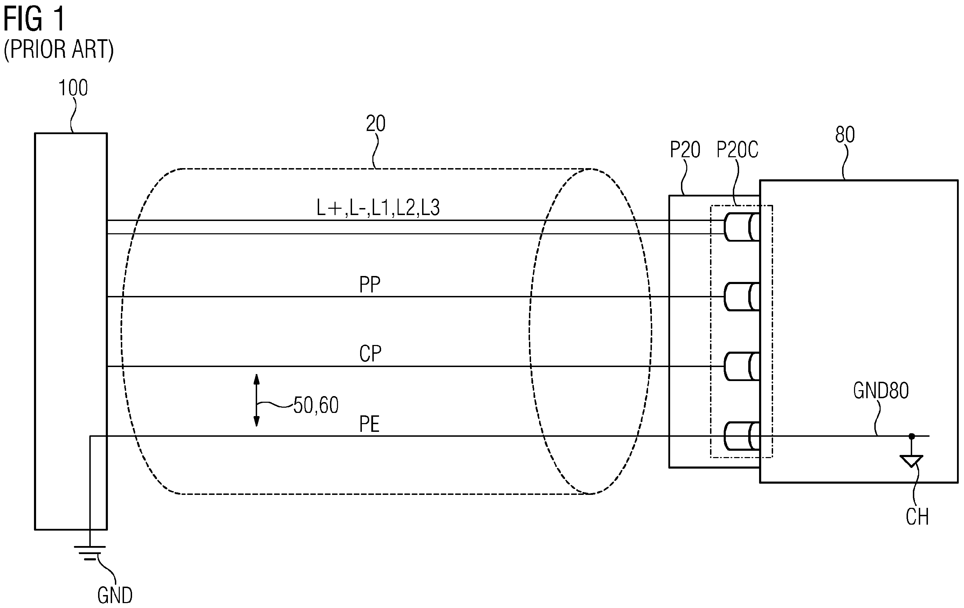

FIG 1 zeigt ein Ladekabel 20 mit einem Ladestecker P20, der fahrzeugseitig angeordnet ist und Steckerkontakte P20C aufweist. Ein Elektrofahrzeug 80 ist angedeutet und weist eine fahrzeugseitige Masseverbindung GND80 auf, die in diesem Fall, auf die Karosserie bzw. das Chassis CH aufgelegt ist.

Ein Ladesystem 100 stellt die notwendige Energie sowie die Masseverbindung GND für das Ladekabel 20 zur Verfügung. Ein derartiges Ladesystem 100 mit den gezeigten Ladekabel 20 ist aus dem Stand der Technik bekannt und weist dabei Leistungsadern L+, L- bzw. im dreiphasigen Fall L1, L2, L3 auf. Einphasige Lösungen sowie kombinierte Lösungen sind ebenfalls möglich. Weiterhin weist das Ladekabel 20 eine PP-Signalleitung, den sogenannten "Proximity Pilot", eine CP-Signalleitung, den sogenannten "Control Pilot" sowie einen Schutzerdeleitung PE (auch "protective earth") auf. Zur Kommunikation zwischen dem Ladesystem 100 und dem Elektrofahrzeug 80, kann ein Rechtecksignal 50 sowie ein Kommunikationssignal 60 über die CP-Leitung bezüglich der Schutzerdeleitung PE zwischen dem Ladesystem 100 und dem Elektrofahrzeug 80 übertragen werden.

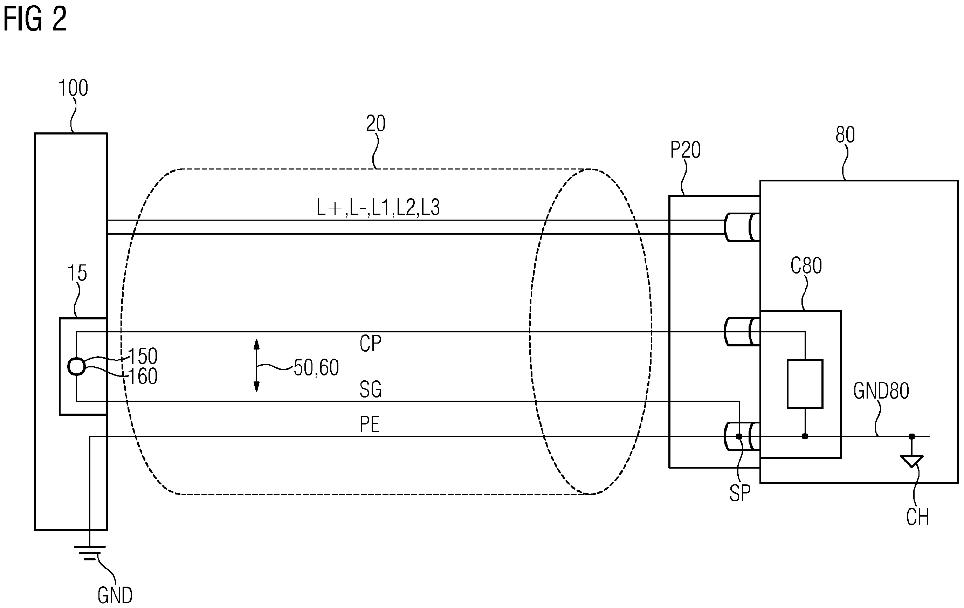

FIG 2 zeigt eine erste Ausführungsform des erfindungsgemäßen Ladekabels 20. Die Bezugszeichen wurden dabei aus FIG 1 übernommen. Das Ladesystem 100 weist eine Kommunikationseinrichtung 15 auf, die eine Signalquelle 160 sowie einen Signalgenerator 150 aufweist. Das Ladekabel 20 weist nun eine Signalmasseleitung SG auf. Im fahrzeugseitigen Stecker P20 wird ein Potentialausgleich zwischen der Signalmasseleitung SG, der Schutzerdeleitung PE und der fahrzeugseitigen Masseverbindung GND80 durchgeführt. Dies ist als ein Sternpunkt SP eingezeichnet.

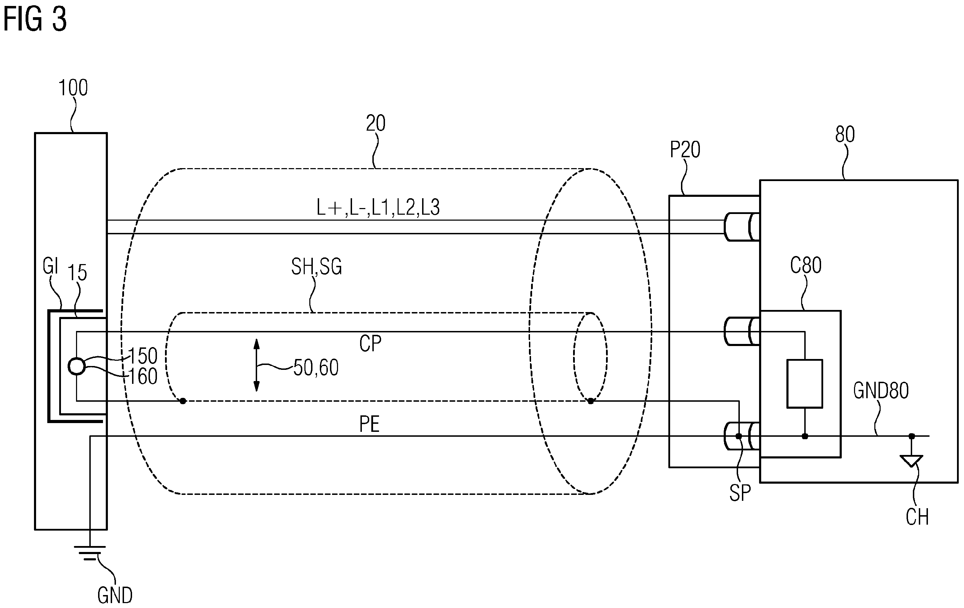

FIG 3 zeigt die aus FIG 2 bekannte Ausführungsform, wobei die Signalmasseleitung SG nunmehr als ein Schirm SH ausgeführt ist. Ergänzend oder alternativ kann die Kommunikationseinrichtung 15 mit einer galvanischen Trennung GI ausgestattet sein. Die Verwendung eines Schirms SH als Signalmasseleitung SG hat den erheblichen Vorteil, dass eine separate Signalmasseleitung SG eingespart werden kann, und die Signalqualität durch die schirmenden Eigenschaften des Schirms SH verbessert werden. Damit verbessert sich die Kommunikationsqualität noch weiter und der Aufbau des Kabels vereinfacht sich gleichzeitig. Selbstverständlich ist eine galvanische Trennung auch für eine Ausführungsform gemäß FIG 2 möglich.

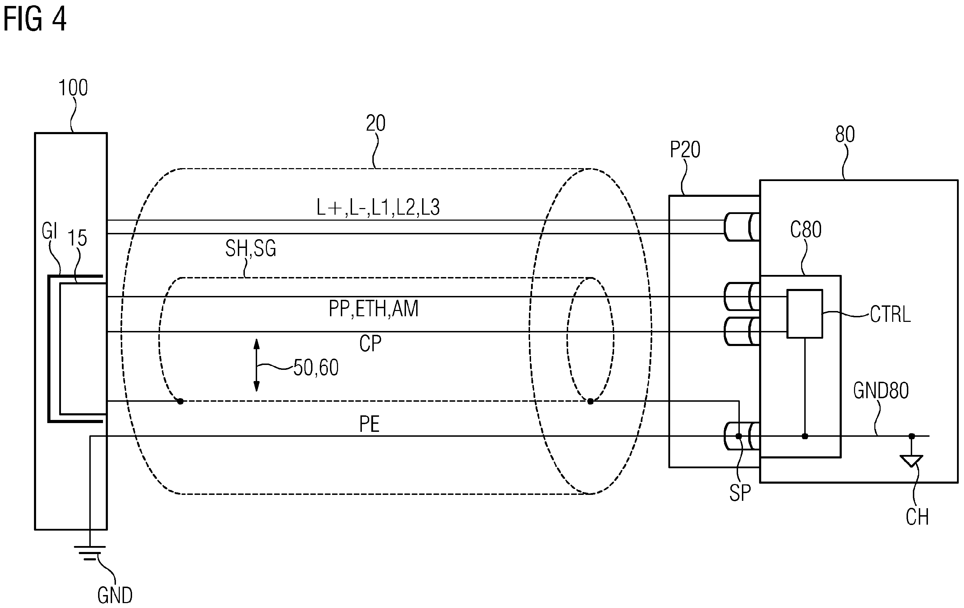

FIG 4 zeigt eine besonders vorteilhafte Ausführungsform eines Ladekabels 20. Dabei wird infrastrukturseitig am Ladesystem 100 die galvanische Trennung GI vorgesehen, die die Kommunikationseinrichtung 15 galvanisch vom Ladesystem 100 und den darin vorgesehenen Leistungsbauteilen trennt. Die Masseeinspeisung GND ist weiterhin nur mit dem Schutzerdeleitung PE verbunden. Die Signalmasseleitung SG ist wie in FIG 3 als Schirm SH ausgebildet. Dieser Schirm umfasst nunmehr nicht nur eine CP-Signalleitung CP, sondern umfasst ebenfalls weitere Signalleitungen PP, ETH. Diese können beispielsweise PP-Signalleitungen für einen "Proximity Pilot", Datensignalleitung ETH, wie beispielsweise eine Ethernet-Leitung oder Analogmessleitungen AM, beispielsweise Temperaturmessleitungen oder Steuerleitungen für Sicherheitsfunktionen sein.

Zusammenfassend betrifft die Erfindung ein störsicheres Ladekabel 20 für ein Elektrofahrzeug 80. Ferner betrifft die Erfindung einen Ladestecker P20, ein Ladesystem 100, sowie ein System 1000. Um ein Ladekabel bereitzustellen, das die Signalqualität zwischen Elektrofahrzeug und Ladeinfrastruktur, z.B. einer Ladesteuerung einer Ladesäule, erheblich verbessert, wird vorgeschlagen, dass das Ladekabel einen fahrzeugseitigen Stecker P20, eine Schutzerdeleitung PE und eine Signalmasseleitung SG aufweist, die fahrzeugseitig derart angeordnet sind, dass sich die Potentiale der Signalmasseleitung SG, der Schutzerdeleitung PE und einer fahrzeugseitigen Masseverbindung GND80 ausgleichen, wenn der Stecker P20 am Elektrofahrzeug 80 angeschlossen ist. Es ist weiter Aufgabe der Erfindung ein Ladesystem 100 sowie ein System 1000 bereitzustellen.

## Patentansprüche

1. Ladekabel (20) für ein Elektrofahrzeug (80), wobei das Elektrofahrzeug (80) eine fahrzeugseitige Masseverbindung (GND80) aufweist, aufweisend:
einen fahrzeugseitigen Stecker (P20), eine Schutzerdeleitung (PE) und eine Signalmasseleitung (SG), die fahrzeugseitig derart angeordnet sind, dass sich die Potentiale der Signalmasseleitung (SG), der Schutzerdeleitung (PE) und der fahrzeugseitigen Masseverbindung (GND80) ausgleichen, wenn der Stecker (P20) am Elektrofahrzeug (80) angeschlossen ist.

2. Ladekabel (20) nach Anspruch 1, wobei die Signalmasseleitung (SG) als ein Schirm (SH) ausgebildet ist.

3. Ladekabel (20) nach einem der vorhergehenden Ansprüche, das derart ausgestaltet ist, dass sich die Potentiale der Signalmasseleitung (SG), der Schutzerdeleitung (PE) und der fahrzeugseitigen Masseverbindung (GND80) in einem Endbereich (E20) des Ladekabels (20) ausgleichen, insbesondere im Stecker (P20) oder an Steckerkontakten (P20C).

4. Ladekabel (20) nach einem der vorhergehenden Ansprüche, wobei ein Sternpunkt (SP) zum Ausgleich der Potentiale dient.

5. Ladekabel (20) nach einem der vorhergehenden Ansprüche, aufweisend einen Schirm (SH), der eine oder mehrere der folgenden Leitungen enthält: eine CP-Signalleitung (CP), eine PP-Signalleitung (PP), eine Datensignalleitung (ETH) und/oder eine Analogsignalleitung (AM).

6. Ladekabel (20) nach einem der vorhergehenden Ansprüche, wobei die Signalmasse (SG) als Bezugspotential für ein Kommunikationssignal (60) und/oder ein Rechtecksignal (50) dient.

7. Ladekabel (20) nach einem der vorhergehenden Ansprüche, das derart ausgestaltet ist, dass sich die Potentiale der Signalmasseleitung (SG), der Schutzerdeleitung (PE) und der fahrzeugseitigen Masseverbindung (GND80) im Elektrofahrzeug (80) ausgleichen, wenn der Stecker (P20) am Elektrofahrzeug (80) angeschlossen ist.

8. Ladekabel (20) nach einem der vorhergehenden Ansprüche, wobei der fahrzeugseitige Stecker (P20) je einen Kontakt (P20C) für die Signalmasseleitung (SG) und die Schutzerdeleitung (PE) aufweist.

9. Ladesystem (100) aufweisend zumindest ein Ladekabel (20) nach einem der vorhergehenden Ansprüche und zumindest eine Kommunikationseinrichtung (15), die zur Kommunikation über zumindest eine Signalleitung (CP, PP, ETH, AM) und eine Signalmasseleitung (SG) als Bezugspotential ausgebildet ist.

10. Ladesystem (100) nach Anspruch 9, wobei die Kommunikationseinrichtung (15) eine galvanische Trennung (GI) aufweist.

11. Ladesystem (100) nach Anspruch 9 oder 10, wobei die Kommunikationseinrichtung (15) einen Signalgenerator (150) zur Erzeugung eines Rechtecksignals (50) und/oder eine Signalquelle (160) zur Erzeugung eines Kommunikationssignals (60) aufweist.

12. Ladesystem (100) nach einem der Ansprüche 9 bis 11, aufweisend eine oder mehrere Ladesteuerungen sowie eine oder mehrere Energieversorgungseinrichtungen.

13. System (1000) aufweisend ein Elektrofahrzeug (80) sowie ein Ladekabel (20) nach einem der Ansprüche 1 bis 8, wobei das Elektrofahrzeug (80) derart ausgestaltet ist, dass sich die Potentiale der Signalmasseleitung (SG), der Schutzerdeleitung (PE) und der fahrzeugseitigen Masseverbindung (GND80) im Elektrofahrzeug (80) ausgleichen, wenn der Stecker (P20) am Elektrofahrzeug (80) angeschlossen ist.

14. Ladestecker (P20) für ein Ladekabel (20), aufweisend eine Kontaktvorrichtung für eine Signalmasseleitung (SG), eine Schutzerdeleitung (PE) und eine fahrzeugseitigen Masseverbindung (GND80).

15. Ladestecker (P20) nach Anspruch 14 aufweisend eine Ausgleichsvorrichtung, vorzugsweise einen Sternpunkt (SP), die zum Potentialausgleich der Signalmasseleitung (SG), der Schutzerdeleitung (PE) und der fahrzeugseitigen Masseverbindung (GND80) ausgebildet ist.
